# EUROPEAN PATENT APPLICATION

(11) **EP 4 622 183 A1**
(43) Date of publication of application: **24.09.2025**
(21) Application number: 25161976.3
(22) Date of filing: 06.03.2025
(51) Int. Cl.: H04L 12/18

(54) **SYSTEM, METHOD, AND CARRIER MEDIUM**

(30) Priority: 21.03.2024 JP 2024045766
(71) Applicant: Ricoh Company, Ltd., Tokyo 143-8555 (JP)
(72) Inventor: INOUE, Ayano, Tokyo, 143-8555 (JP); FUJIOKA, Susumu, Tokyo, 143-8555 (JP)
(74) Representative: SSM Sandmair

(57) **Abstract**

A system includes one or more devices (4), one or more reading devices (2) each of which reads device information of the one or more devices (4), a server apparatus (1) to receive, from each one of the one or more reading devices (2), correspondence data associating the device information read by the reading device (2) and location information indicating a location of the reading device (2), and store the correspondence data associating the device information and the location information, and an information terminal (5). The server apparatus (1) transmits, to the information terminal (5), display information including identification information of the one or more devices (4) each in correspondence with the location indicated by the location information read by the reading device (2) that has read the device information of the one or more devices (4), and transmits, to the information terminal (5), wireless connection information of a particular device (4) selected by the information terminal (5) from the one or more devices based on the display information The information terminal (5) establishes wireless communication with the particular device (4) using the wireless connection information transmitted from the server apparatus (1).

## Description

### BACKGROUND

### Technical Field

The present disclosure relates to a system, a method, and a carrier medium.

### Related Art

As known in the art, setting information of a device used for a meeting is transmitted in advance to an information terminal of a meeting participant. At the start of the meeting, the information terminal to which the setting information is transmitted establishes a wireless connection with the device and the device can be used from the information terminal.

Japanese Unexamined Patent Application Publication No. 2004-096495 discloses a technique of distributing, to an information terminal used at a meeting and other information devices, a meeting notification e-mail to which wireless connection information is attached, and enabling a wireless connection among the information terminal and the other information devices based on the wireless connection information.

However, in the art, in order for the information terminal to establish the wireless connection with the device to be connected such as a meeting device, a setting needs to be made in advance. For this reason, in the case where the device is changed immediately before or during the meeting, an inconvenience occurs that an extra work such as a change of the setting made in advance is required each time.

### SUMMARY

The present disclosure described herein provides a system including one or more devices, one or more reading devices each of which reads device information of the one or more devices, a server apparatus to receive, from each one of the one or more reading devices, correspondence data associating the device information read by the reading device and location information indicating a location of the reading device, and store the correspondence data associating the device information and the location information, and an information terminal. The server apparatus transmits, to the information terminal, display information including identification information of the one or more devices each in correspondence with the location indicated by the location information read by the reading device that has read the device information of the one or more devices , and transmits, to the information terminal, wireless connection information of a particular device selected by the information terminal from the one or more devices based on the display information The information terminal establishes wireless communication with the particular device using the wireless connection information transmitted from the server apparatus.

In another aspect, a method performed by a system including a plurality of devices, a plurality of reading devices, a server apparatus, and an information terminal includes reading, with one or more reading devices, device information of the one or more devices, transmitting, from each one of the one or more reading devices to the server apparatus, correspondence data associating location information indicating a location of the reading device and the device information read by the reading device, transmitting, from the server apparatus to the information terminal, display information including identification information of one or more devices each in correspondence with the location indicated by the location information read by the reading device that has read the device information of a particular device, transmitting, from the server apparatus to the information terminal, wireless connection information of the particular device selected by the information terminal from the one or more devices based on the display information, and establishing, with the information terminal, wireless communication with the particular device using the wireless connection information transmitted from the server apparatus.

In another aspect, a carrier medium carries computer readable code for controlling a server apparatus to carry out a method including receiving, from one or more reading devices, correspondence data associating location information indicating a location of each one of the one or more reading devices and device information read by the reading device, transmitting, to an information terminal, display information including identification information of one or more devices each in correspondence with the location indicated by the location information read by the reading device that has read the device information of a particular device, and transmitting, to the information terminal, wireless connection information of the particular device selected by the information terminal from the one or more devices based on the display information.

According to one aspect of the present disclosure, even when the device is changed, a wireless connection is enabled between the device and the information terminal without requiring the operator to perform the work to change the setting.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating a configuration of a system;
FIG. 2 is a block diagram illustrating a hardware configuration of a management server;
FIG. 3 is a block diagram illustrating a hardware configuration of a radiofrequency identification (RFID) tag reader;
FIG. 4 is a block diagram illustrating a hardware configuration of an RFID tag;
FIG. 5 is a block diagram illustrating a hardware configuration of a meeting device;
FIG. 6 is a block diagram illustrating a hardware configuration of a communication terminal;
FIG. 7 is a schematic diagram illustrating a functional configuration of apparatuses and devices of a system;
FIG. 8 is a block diagram illustrating a functional configuration of a management server when applied to a meeting server;
FIGS. 9A to 9E are tables each illustrating a data structure of data stored in the storage unit of FIG. 8;
FIG. 10 is a diagram illustrating a layout of a virtual office;
FIG. 11 is a sequence diagram illustrating a process to register device information of a projector such as a meeting device in a management server when an operator enters a meeting room with the projector as the meeting device;
FIG. 12 is a sequence diagram illustrating a process executed when a communication terminal activates a meeting application installed in the communication terminal in response to an operation by an operator in a meeting room where the operator enters;
FIG. 13 is a diagram illustrating a configuration of a virtual office screen created by a display data creation unit;
FIG. 14 is a diagram illustrating a confirmation screen;
FIG. 15 is a diagram illustrating a screen updated after a wireless connection is established;
FIG. 16 is a sequence diagram illustrating a process to register and display the name of a meeting according to a first modification;
FIG. 17 is a diagram illustrating a meeting booking information registration screen;
FIG. 18 is a diagram illustrating a dialog box for confirmation;
FIG. 19 is a diagram illustrating a configuration of a virtual open space screen created by a display data creation unit; and
FIG. 20 is a diagram illustrating another dialog box for confirmation.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A system, a method, and a carrier medium according to embodiments of the present disclosure are described in detail below with reference to the accompanying drawings. In the embodiments described below, a location corresponding to a reading device is set for each reading device, and a device is managed for each set location. It is assumed that the reading device is located in a meeting room. Since rooms are individually separated, the device is managed by room. In the embodiments described below, a case in which the device is a meeting device is described, and the embodiment may be carried out in not only the meeting format described below but also various other meeting formats.

In the following description, a management server corresponds to a "server apparatus," a radiofrequency identification (RFID) tag reader corresponds to a "reading device," a meeting device corresponds to a "device," and a communication terminal corresponds to an "information terminal."

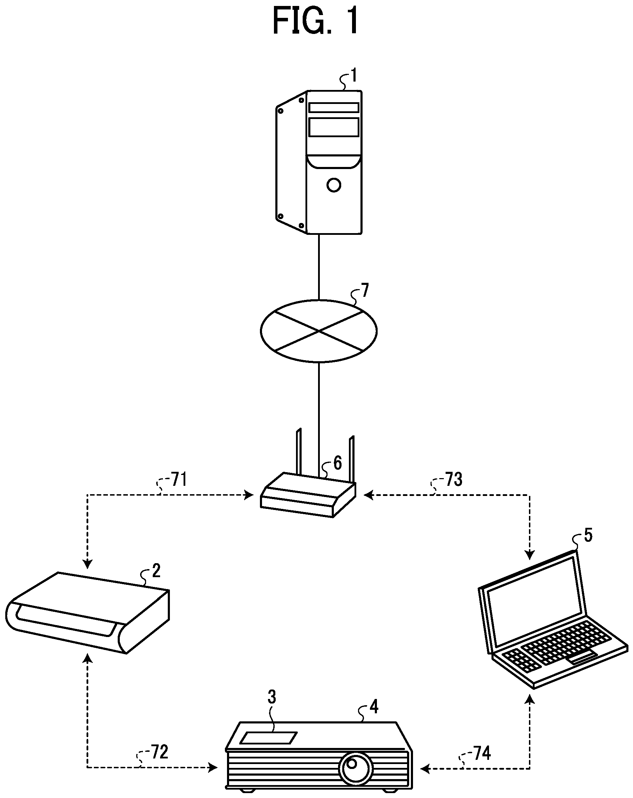

FIG. 1 is a diagram illustrating a configuration of a system. The system illustrated in FIG. 1 includes a management server 1, an RFID tag reader 2, a meeting device 4 having an RFID tag 3, and a communication terminal 5 used by an operator.

The management server 1 is connected to a network 7. The network 7 is implemented by, for example, a local area network (LAN), a virtual private network (VPN), or the Internet.

In the present embodiment, a wireless LAN access point 6 is provided as an example, and the rest of the apparatus and devices communicate with the management server 1 via the wireless LAN access point 6.

The number of wireless LAN access points 6 illustrated in FIG. 1 is one, but is not limited to one. The configuration may be such that communication with the management server 1 is performed via other wireless LAN access points 6 in accordance with the location where the wireless connection is performed. In such a case, it is assumed that the multiple wireless LAN access points 6 are connected to the network 7 via a router.

In the present embodiment, a configuration is illustrated in which the rest of the apparatus and devices wirelessly connect to the wireless LAN access point 6 to communicate with the management server 1. However, another configuration may be employed in which the rest of the apparatus and devices communicate with the management server 1 via a wire.

The management server 1 manages location information transmitted from the RFID tag reader 2 and device information of the meeting device 4 in association with each other, and provides the communication terminal 5 used by the operator with display information indicating identification information of the meeting device 4 in correspondence with a location indicating the location of the meeting device 4. The management server 1 transmits, to the communication terminal 5, wireless connection information of the meeting device 4 at the location selected by the operator of the communication terminal 5 in the display information.

The wireless LAN access point 6 performs wireless communication 71 with the RFID tag reader 2 and wireless communication 73 with the communication terminal 5. In addition, the wireless LAN access point 6 relays, via the router, communication between the RFID tag reader 2 and the management server 1, and communication between the communication terminal 5 and the management server 1.

The RFID tag reader 2 reads, by a non-contact reading 72, the device information of the meeting device 4 brought into a meeting room from the RFID tag 3, and transmits the read device information together with meeting room identification information of the meeting room stored in the RFID tag reader 2 to the management server 1 via the wireless LAN access point 6. The RFID tag reader 2 is arranged within a reading range where the RFID tag reader 2 can read identification information of a device brought into the meeting room. In the present embodiment, the RFID tag reader 2 is arranged at the entrance of each meeting room as an example. The meeting room identification information corresponds to the location information.

The meeting device 4 is a portable device that can be wirelessly connected to the communication terminal 5. The meeting device 4 is described as a projector as an example.

The RFID tag 3 stores the device information owned by the meeting device 4. The RFID tag 3 is attached to the meeting device 4 and carried together with the meeting device 4.

The communication terminal 5 is, for example, an information terminal such as a smartphone, a tablet terminal, or a laptop personal computer (PC). The communication terminal 5 is an information terminal that the operator brings into the meeting room and uses for a meeting.

The communication terminal 5 acquires the wireless connection information corresponding to the meeting device 4 from the management server 1, and establishes the wireless communication connection 74 with the meeting device 4 using the acquired wireless connection information. After the wireless communication connection 74 is established with the meeting device 4, the operator can remotely operate the meeting device 4 using the communication terminal 5.

Attaching the RFID tag 3 to the meeting device 4 is given by way of example. The arrangement and fixing method of the RFID tag 3 on the meeting device 4 may be modified as appropriate. For example, the RFID tag 3 may be arranged inside the meeting device 4.

In the present embodiment, the description of the non-contact reading 72 for the RFID tag reader 2 to read the device information from the RFID tag 3 is given by way of example. As a method for reading the device information, another method may be adopted. For example, it is assumed that the RFID tag reader 2 is an imaging camera and the RFID tag 3 is a two-dimensional code (e.g., QUICK RESPONSE (QR) CODE). In such a case, the image of the two-dimensional code is read by the imaging camera to acquire the device information.

The meeting device is given by way of example for the sake of description. Instead of the meeting device, another device not classified as a meeting device may be used.

The management server 1 is described as a single information processing apparatus. However, the functions of the management server 1 may be distributed among multiple information processing apparatuses.

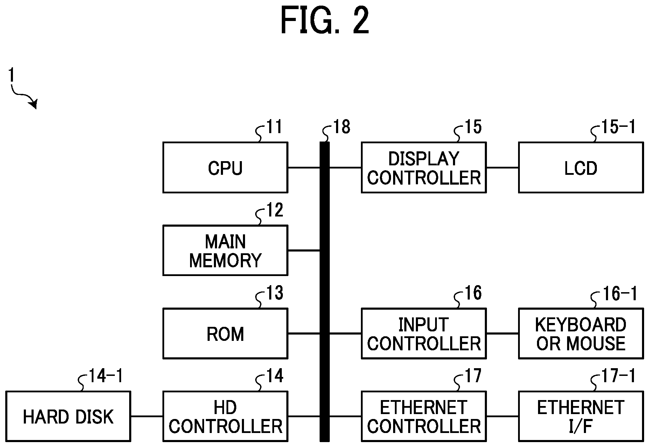

FIG. 2 is a block diagram illustrating a hardware configuration of a management server 1. As illustrated in FIG. 2, the management server 1 includes a central processing unit (CPU) 11, a main memory 12, a read-only memory (ROM) 13, a hard disk (HD) controller 14, a hard disk 14-1, a display controller 15, a liquid crystal display (LCD) 15-1, an input controller 16, a keyboard (or mouse, etc.) 16-1, an ETHERNET controller 17, and an ETHERNET interface (I/F) 17-1.

The CPU 11, the main memory 12, the ROM 13, the HD controller 14, the display controller 15, the input controller 16, and the ETHERNET controller 17 are connected to one another via a bus 18. The bus 18 is, for example, an address bus or a data bus.

The CPU 11 is a central processing unit. The CPU 11 executes processing according to a control processing program stored in the ROM 13, an operating system (OS) read from the hard disk 14-1 onto the main memory 12, and various application programs. The various application programs include programs that provide various services such as managing the location of the meeting device 4 and providing the wireless connection information of the meeting device 4, and programs that execute a meeting.

The main memory 12 is a volatile memory such as a dynamic random-access memory (DRAM). The main memory 12 is used as a work area for the CPU 11.

The ROM 13 is a nonvolatile memory such as a read-only memory. The ROM 13 stores in advance programs for starting up the system when the power of the management server 1 is turned on and for controlling peripheral devices.

The HD controller 14 controls the operation of the hard disk 14-1. For example, the HD controller 14 includes a micro serial advanced technology attachment (SATA) interface as an interface with the hard disk 14-1, and performs high-speed data transfer with the hard disk 14-1.

The hard disk 14-1 stores, for example, the OS, the various application programs, and data.

The display controller 15 controls the display of a display device. The LCD 15-1 is a liquid crystal display, which is given by way of example as the display device.

The input controller 16 outputs information input by an input device to the CPU 11. The keyboard (or mouse, etc.) 16-1 is given by way of example as the input device.

The ETHERNET controller 17 controls communication with other devices connected to the ETHERNET via the ETHERNET I/F 17-1. The ETHERNET controller 17 executes a communication protocol conforming to, for example, the Institute of Electrical and Electronics Engineers (IEEE) 802.3 standard to control the communication with the other devices connected to the ETHERNET via the ETHERNET I/F 17-1.

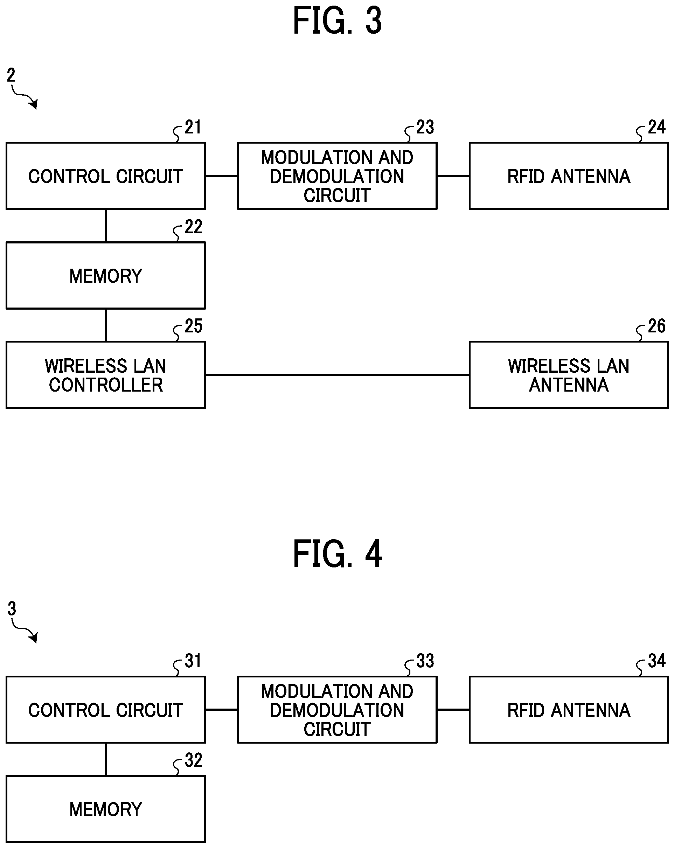

FIG. 3 is a block diagram illustrating a hardware configuration of an RFID tag reader 2. As illustrated in FIG. 3, the RFID tag reader 2 includes a control circuit 21, a memory 22, a modulation and demodulation circuit 23, an RFID antenna 24, a wireless LAN controller 25, and a wireless LAN antenna 26, which are connected to one another by wiring.

The control circuit 21 controls data transmitted among the memory 22, the modulation and demodulation circuit 23, and the wireless LAN controller 25. The control circuit 21 is, like the management server 1, configured with, for example, a CPU and a ROM.

The memory 22 is a nonvolatile memory and has a data area for storing meeting room identification information and another data area for storing device information.

The modulation and demodulation circuit 23 performs Manchester coding using an amplitude shift keying (ASK) modulation on data transmitted to and received from the RFID tag 3. The modulation and demodulation circuit 23 transmits, to the control circuit 21, data (device information) obtained by demodulating radio waves received from the RFID tag 3 through transmission and reception of the radio waves via the RFID antenna 24.

The wireless LAN controller 25 executes a communication protocol conforming to, for example, the IEEE 802.11ax standard, and performs wireless communication with the wireless LAN access point 6 by transmitting and receiving radio waves via the wireless LAN antenna 26.

FIG. 4 is a block diagram illustrating a hardware configuration of an RFID tag 3. As illustrated in FIG. 4, the RFID tag 3 includes a control circuit 31, a memory 32, a modulation and demodulation circuit 33, and an RFID antenna 34, which are connected to one another by wiring.

The control circuit 31 controls data. For example, the control circuit 31 reads device information from the memory 32 and transmits the read device information to the modulation and demodulation circuit 33. The control circuit 31 is, like the management server 1, configured with, for example, a CPU and a ROM.

The memory 32 is a nonvolatile memory. The memory 32 has a data area for storing the device information of the meeting device 4 to which the RFID tag 3 is attached.

The modulation and demodulation circuit 33 performs Manchester coding using the ASK modulation on data transmitted to and received from the RFID tag 2. For example, the modulation and demodulation circuit 33 receives radio waves via the RFID antenna 34, encodes data transmitted from the control circuit 31, and transmits the encoded data to the RFID tag reader 2 via the RFID antenna 34.

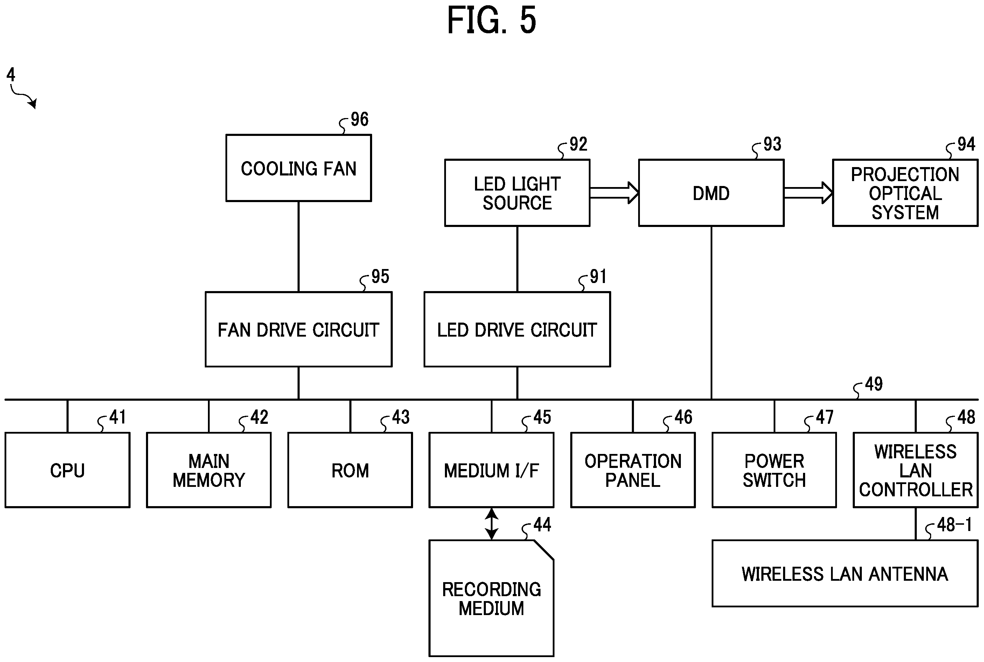

FIG. 5 is a block diagram illustrating a hardware configuration of a meeting device 4. In FIG. 5, a hardware configuration in the case where the meeting device 4 is a projector is illustrated as an example.

As illustrated in FIG. 5, the meeting device 4 includes a CPU 41, a main memory 42, a ROM 43, a medium interface (I/F) 45 to which a recording medium 44 is connected, an operation panel 46, a power switch 47, a wireless LAN controller 48, a wireless LAN antenna 48-1, a light-emitting diode (LED) drive circuit 91, an LED light source 92, a digital micromirror device (DMD) 93, a projection optical system 94, a fan drive circuit 95, and a cooling fan 96. The CPU 41, the main memory 42, the ROM 43, the medium I/F 45, the operation panel 46, the power switch 47, the wireless LAN controller 48, the LED drive circuit 91, the DMD 93, and the fan drive circuit 95 are connected to one another via a bus 49.

The CPU 41 is a central processing unit that controls the entire operation of the meeting device 4. The CPU 41 executes a control processing program stored in the ROM 43 to execute processing.

The main memory 42 is a volatile memory such as a DRAM. The main memory 42 is used as a work area for the CPU 41.

The ROM 43 is a nonvolatile memory. The ROM 43 stores in advance programs for starting up the system when the power of the meeting device 4 is turned on and for controlling peripheral devices.

The medium I/F 45, which may be implemented by an interface circuity, controls the reading and writing of data from and to the recording medium 44 such as a flash memory.

The operation panel 46 is an operation device used by the operator. For example, the operation panel 46 receives operations for, for example, adjusting the size of a projected image, adjusting the color tone, adjusting the focus, and adjusting the keystone.

The power switch 47 is a switch for powering the meeting device 4.

The wireless LAN controller 48 controls communication with other devices. The wireless LAN controller 48 executes a communication protocol conforming to, for example, the IEEE 802.11ax standard, and controls the communication with the other devices by transmitting and receiving radio waves via the wireless LAN antenna 48-1.

The LED drive circuit 91 is a drive circuit that drives the LED light source 92.

The DMD 93 deflects the light emitted from the LED light source 92 based on image data generated by the CPU 41 to form a projection image, and outputs the projection image to the projection optical system 94. The projection image emitted from the projection optical system 94 is projected onto the projection surface.

The fan drive circuit 95 is a drive circuit that drives the cooling fan 96.

When the power switch 47 is turned on, the CPU 41 is activated in accordance with a control program stored in advance in the ROM 43, and controls the entire operation of the meeting device 4.

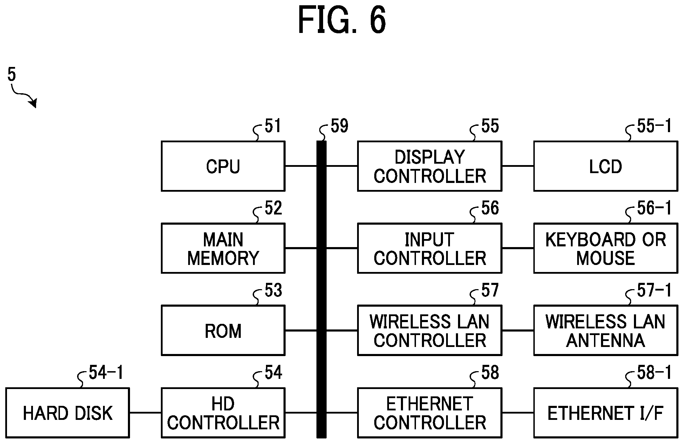

FIG. 6 is a block diagram illustrating a hardware configuration of the communication terminal 5. As illustrated in FIG. 6, the communication terminal 5 includes a CPU 51, a main memory 52, a ROM 53, an HD controller 54, a hard disk 54-1, a display controller 55, an LCD 55-1, an input controller 56, a keyboard (or a mouse, etc.) 56-1, a wireless LAN controller 57, a wireless LAN antenna 57-1, an ETHERNET controller 58, and an ETHERNET I/F 58-1.

The CPU 51, the main memory 52, the ROM 53, the HD controller 54, the display controller 55, the input controller 56, the wireless LAN controller 57, and the ETHERNET controller 58 are connected to one another via a bus 59. The bus 59 is, for example, an address bus or a data bus.

The CPU 51 is a central processing unit. The CPU 51 executes processing according to a control processing program stored in the ROM 53, an OS read from the hard disk 54-1 onto the main memory 52, and various application programs. One of the various applications is a meeting application.

The main memory 52 is a volatile memory such as a DRAM. The main memory 52 is used as a work area for the CPU 51.

The ROM 53 is a nonvolatile memory. The ROM 53 stores in advance programs for starting up the system when the power of the communication terminal 5 is turned on and for controlling peripheral devices.

The HD controller 54 controls the operation of the hard disk 54-1.

The hard disk 54-1 stores, for example, the OS, the various application programs, and data.

The display controller 55 controls the display of a display device. The LCD 55-1 is a liquid crystal display, which is given by way of example as the display device.

The input controller 56 outputs information input by an input device to the CPU 51. The keyboard (or mouse, etc.) 56-1 is given by way of example as the input device.

The wireless LAN controller 57 controls communication with other devices. The wireless LAN controller 57 executes a communication protocol conforming to, for example, the IEEE 802.11ax standard, and controls the communication with the other devices by transmitting and receiving radio waves via the wireless LAN antenna 57-1.

The ETHERNET controller 58 controls communication with other devices connected to the ETHERNET via the ETHERNET I/F 58-1. The ETHERNET controller 58 executes a communication protocol conforming to, for example, the IEEE 802.3 standard to control the communication with the other devices connected to the ETHERNET via the ETHERNET I/F 58-1.

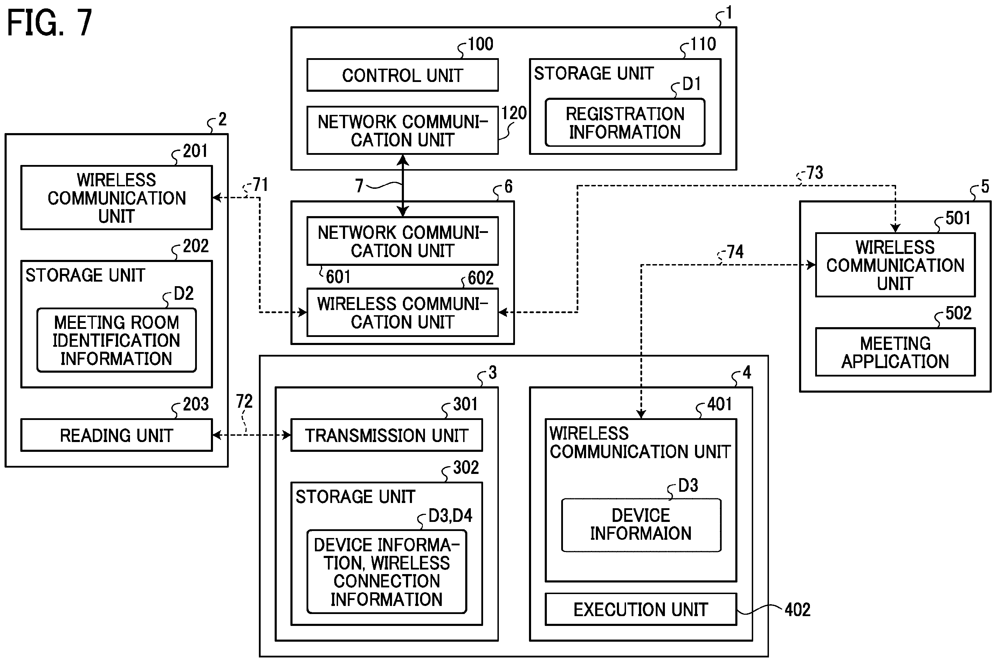

FIG. 7 is a schematic diagram illustrating a functional configuration of apparatuses and devices of a system. As illustrated in FIG. 7, the management server 1 includes a control unit 100, a network communication unit 120, and a storage unit 110. The RFID tag reader 2 includes a wireless communication unit 201, a storage unit 202, and a reading unit 203. The RFID tag 3 includes a transmission unit 301 and a storage unit 302. The meeting device 4 includes a wireless communication unit 401 and an execution unit 402. The communication terminal 5 includes a wireless communication unit 501 and a meeting application 502. The wireless LAN access point 6 includes a network communication unit 601 and a wireless communication unit 602.

The meeting application 502 is downloaded from the management server 1 or another distribution site to the communication terminal 5 and installed in the communication terminal 5 in advance.

In FIG. 7, the wireless communication unit 501 is illustrated as the functional unit of the communication unit of the communication terminal 5. The communication terminal 5 also includes another communication unit having a priority to be connected to the network 7 by the ETHERNET controller 58 to communicate with the management server 1. In the following description, it is assumed that the communication terminal 5 connects to the wireless LAN access point 6.

In the storage unit 302, device information D3 that contains information (referred to as device identification information) unique to the device such as the device name of the meeting device 4 to which the RFID tag 3 is attached, and wireless connection information D4 used for establishing a wireless connection with the meeting device 4 are stored. The device information D3 also contains the name of the device type such as a projector. The wireless connection information D4 contains, for example, a network name such as a service set identifier (SSID), an authentication and encryption method, and an encryption key.

When the meeting device 4 to which the RFID tag 3 is attached is brought into the meeting room, the device information D3 in the storage unit 302 is transmitted from the transmission unit 301 of the RFID tag 3 in response to a radio wave transmitted by the reading unit 203 of the RFID tag reader 2, and the device information D3 is read by the reading unit 203. For example, when the distance between the reading unit 203 and the RFID tag 3 is reduced, an induced electromagnetic field is generated, in which communication can be performed. The RFID tag 3 may be either a passive tag or an active tag. The communication method between the reading unit 203 of the RFID tag reader 2 and the RFID tag 3 may be either an electromagnetic induction method or a radio wave method.

The RFID tag reader 2 associates the device information D3 read by the reading unit 203 and meeting room identification information D2 in the storage unit 202 with each other in registration information in a form that can be transmitted to a higher-level system, and transmits the registration information from the wireless communication unit 201 to the management server 1.

As illustrated in FIG. 7, the RFID tag reader 2 communicates with the management server 1 via the wireless LAN access point 6. The meeting room identification information D2 in the storage unit 202 is meeting room identification information for identifying the meeting room where the RFID tag reader 2 is arranged.

The meeting room identification information is set in advance in the management server 1 and the RFID tag reader 2. For example, in response to the operation by an administrator of the management server, the management server 1 issues meeting room identification information corresponding to the location where the RFID tag reader 2 is arranged, and the meeting room identification information issued by the management server 1 is set in the RFID tag reader 2.

The communication terminal 5 communicates with the management server 1, specifically with the control unit 100, via the wireless communication unit 501 using the meeting application 502. For example, when the communication terminal 5 is brought into the meeting room and the meeting application 502 is activated, communication is established between the communication terminal 5 and the management server 1, and the meeting application 502 starts the communication with the control unit 100.

The control unit 100 associates the meeting room identification information transmitted from the RFID tag reader 2 and the device information 3 of the meeting device 4 with each other in registration information D1 and manages the registration information D1. In response to a request from the meeting application 502 installed in the communication terminal 5, the control unit 100 creates display information indicating the identification information of the meeting device 4 in correspondence with the location indicating the location where the meeting device 4 is placed, and provides the meeting application 502 with the display information. In response to a request for the wireless connection information of the meeting device 4 transmitted from the meeting application 502, the control unit 100 searches for the wireless connection information corresponding to the meeting device 4 in the registration information D1 and transmits the wireless connection information to the communication terminal 5.

The registration information D1 contains layout information that is a basis of the display information of the location of the device, the issued meeting room identification information, correspondence information in which the device and the location of the meeting room are associated with each other, and the wireless connection information of each device.

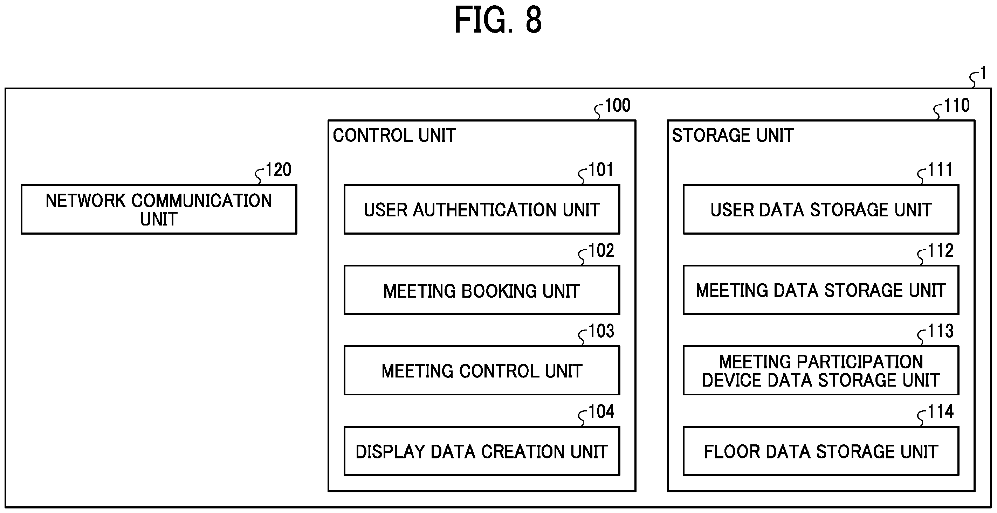

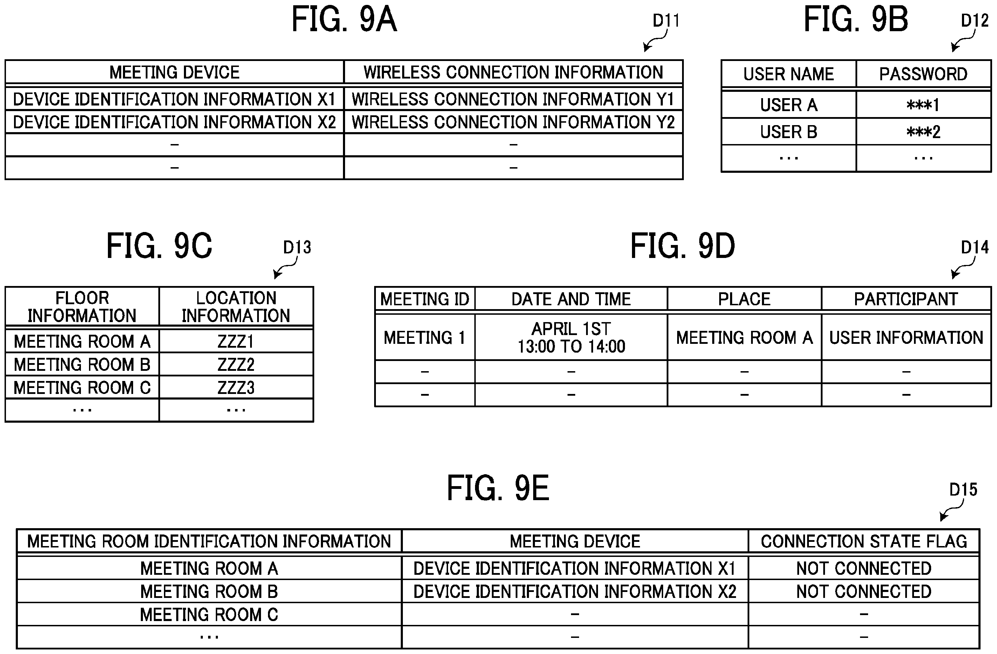

In FIG. 8, a functional configuration of the management server 1 when applied to a meeting server is illustrated, and is described in detail later with reference to FIGS. 8 and 9. The meeting server has a function of managing information on a meeting.

The wireless communication unit 501 of the communication terminal 5 establishes a wireless communication connection with the wireless communication unit 401 of the meeting device 4 using the wireless connection information transmitted from the management server 1.

After the wireless communication connection is established between the wireless communication unit 501 and the wireless communication unit 401, the communication terminal 5 can operate the execution unit 402 of the meeting device 4 using predetermined commands.

FIG. 8 is a block diagram illustrating a functional configuration of a management server 1 when applied to a meeting server. As illustrated in FIG. 8, the management server 1 includes a user authentication unit 101, a meeting booking unit 102, a meeting control unit 103, a display data creation unit 104, a user data storage unit 111, a meeting data storage unit 112, a meeting participation device data storage unit 113, a floor data storage unit 114, and a network communication unit 120. These functional units are provided in modules.

The network communication unit 120 transmits and receives data to and from the communication terminal 5 using web real time communication (WebRTC), and transmits and receives data used for user authentication using a hypertext transfer protocol secure (HTTPS).

The user authentication unit 101 collates the user name and password received by the network communication unit 120 from the request source such as the communication terminal 5 with the user name and password stored in the user data storage unit 111 to authenticate the operator.

The meeting booking unit 102 registers the data of the meeting including the booking contents in the meeting data storage unit 112. The data of the meeting is registered in association with a meeting ID. The data of the meeting contains, for example, the date and time of the meeting, the place of the meeting, and the participants of the meeting.

The meeting control unit 103 registers the device identification information and the wireless connection information D4 out of the registration information transmitted from the RFID tag reader 2 in the meeting participation device data storage unit 113 in association with each other.

The meeting control unit 103 also registers the device identification information and the meeting room identification information D2 out of the registration information transmitted from the RFID tag reader 2 in the meeting data storage unit 112 in association with each other.

Further, the meeting control unit 103 executes, for each meeting ID registered in the meeting data storage unit 112, a communication meeting among communication terminals of operators that are permitted to connect when the date and time of the meeting arrives.

The display data creation unit 104 creates a web page to be requested by the meeting application 502 that is the request source. The display data creation unit 104 creates a web page requested via the network communication unit 120, and transmits the web page to the meeting application 502 that is the request source via the network communication unit 120.

The display data creation unit 104 creates, for example, a web page used for setting a meeting booking and a web page used for confirming a meeting booking. When the web page used for setting a meeting booking is requested, the display data creation unit 104 creates the web page used for setting a meeting booking, and transmits the created web page to the request source. When the web page used for confirming a meeting booking is requested, the display data creation unit 104 extracts the data of the meeting from the meeting data storage unit 112, sets the data in the web page used for confirming a meeting booking, and transmits the web page to the request source.

When a web page for a connection service with the meeting device 4 is requested, the display data creation unit 104 transmits, to the request source, a web page on which the location of each device such as the meeting device 4 is visualized based on the pieces of data registered in the meeting data storage unit 112 and the floor data storage unit 114. When the acquisition of the wireless connection information of a first device such as the meeting device 4 on the web page on which the location of each device such as the meeting device 4 is visualized is requested from the request source, the display data creation unit 104 transmits, for example, a web page used for confirmation, searches the meeting participation device data storage unit 113 for the wireless connection information corresponding to the first device such as the meeting device 4, and transmits the wireless connection information to the request source.

As the data in the floor data storage unit 114, data of a predetermined layout stored in advance may be used. Alternatively, data in which the names of meeting rooms and the locations of the meeting rooms are registered in a layout obtained by simulating an actual office based on the floor data of the office may be used. In the latter case, the display data creation unit 104 transmits a web page used for setting the floor to the meeting application 502, receives the setting of the names of the meeting rooms and the locations of the meeting rooms in the actual office, and registers the setting in the floor data storage unit 114.

FIGS. 9A to 9E are tables each illustrating a data structure of data stored in the storage unit 110 of FIG. 8. In the meeting participation device data storage unit 113, a device data table D11 illustrated in FIG. 9A is stored. In the user data storage unit 111, a user data table D12 illustrated in FIG. 9B is stored. In the floor data storage unit 114, a floor data table D13 illustrated in FIG. 9C is stored. In the meeting data storage unit 112, a meeting booking data table D14 illustrated in FIG. 9D and a device connection information table D15 illustrated in FIG. 9E are stored.

In the device data table D11, a "meeting device (i.e., device identification information)" and "wireless connection information" are associated with each other. In the user data table D12, a "user name" and a "password" are associated with each other. In the floor data table D13, "floor information" and "location information" are associated with each other. In the "floor information," the names of the meeting rooms are set. In the "location information," the locations of the meeting rooms (for example, the coordinates of each meeting room, the order of the arrangement of each meeting room, or the positional relationship of each meeting room) are set. In the meeting booking data table D14, a "meeting ID," a "date and time," a "place," and a "participant" are associated with one another. In the "participant" section, user information of the participant or identification information of the device used by the participant is set. In the device connection information table D15, "meeting room identification information," a "meeting device (i.e., device identification information)," and a "connection state flag" are associated with one another. In the device connection information table D15, meeting rooms and meeting devices are associated with each other.

The data registered in each table of FIGS. 9A to 9E is given by way of example for the sake of description later.

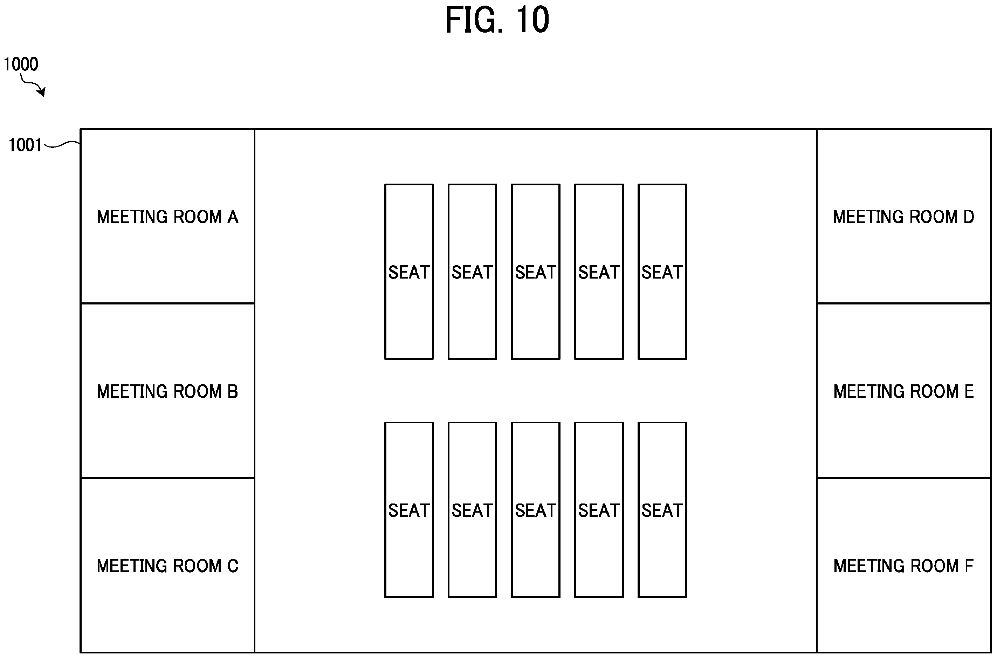

FIG. 10 is a diagram illustrating a layout of a virtual office (screen) 1000. The virtual office (screen) 1000 illustrated in FIG. 10 is laid out with meeting rooms A to F and unreserved seats located in the center. The layout of the virtual office (screen) 1000 is created by the display data creation unit 104 based on the setting stored in advance in the floor data table D13. By changing the settings of the "floor information" or the "location information" in the floor data table D13, the layout and the locations or arrangement of the meeting rooms can be changed later.

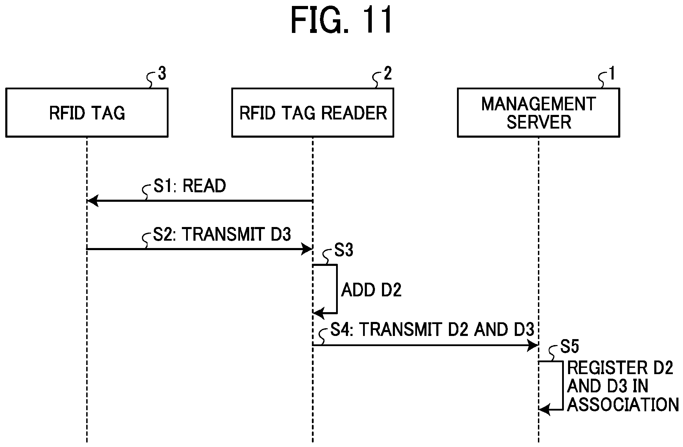

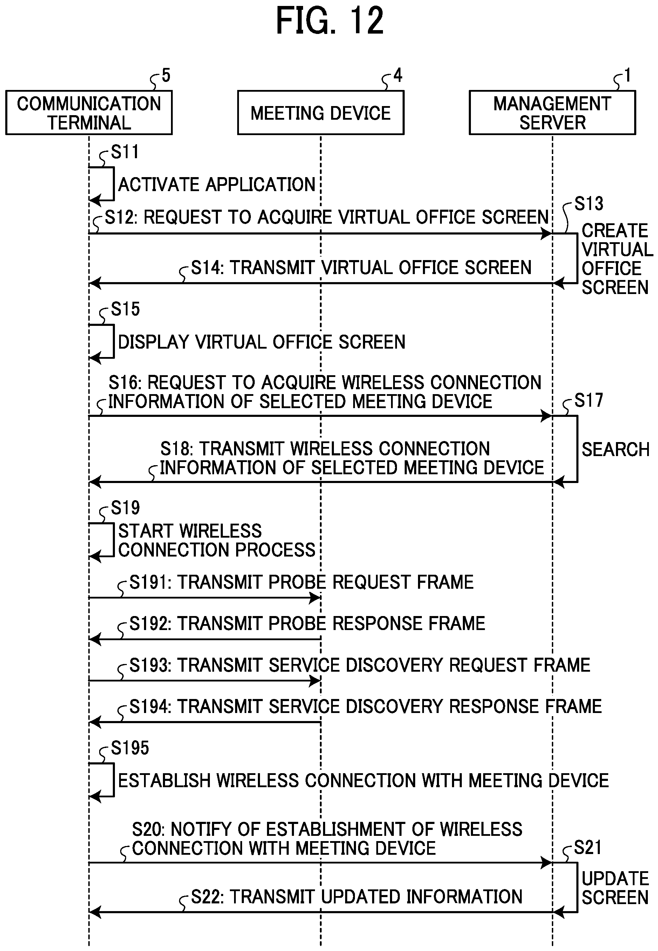

Subsequently, the processes executed among the apparatuses and devices included in the system and the processes executed by each of the apparatuses and devices are described below with reference to the sequence diagrams of FIGS. 11 and 12. In the meeting room, one RFID tag reader 2 is set at the entrance for each meeting room, and the meeting room identification information issued by the management server 1 is set in each RFID tag reader 2. It is assumed that each RFID tag reader 2 is ready to read the RFID tag 3 that comes close to the RFID tag reader 2.

In FIGS. 11 and 12, the processes when one operator enters one meeting room are illustrated. However, the processes when another operator enters another meeting room are similar to the aforementioned processes.

FIG. 11 is a sequence diagram illustrating a process to register device information of a projector such as a meeting device 4 in a management server 1 when an operator enters a meeting room with the projector as the meeting device 4. This process corresponds to the process when the operator enters the meeting room with the projector as the meeting device 4 and the laptop PC as the communication terminal 5 in order to hold the meeting using the projector.

When the operator enters the meeting room, the distance between the RFID tag reader 2 and the RFID tag 3 attached to the projector as the meeting device 4 is reduced, and the RFID tag reader 2 becomes ready for communication. In steps S1 and S2, the RFID tag reader 2 reads out the device information D3 stored in the RFID tag 3.

In response to receiving the device information D3, in step S3, the RFID tag reader 2 adds the meeting room identification information D2 stored in advance in the RFID tag reader 2 to create registration information in a form that can be transmitted to a higher-level system. In step S4, the RFID tag reader 2 transmits the registration information (the meeting room identification information D2 and the device information D3) to the management server 1.

In step S5, the management server 1 registers the meeting room identification information D2 and the device information D3 included in the received registration information in association with each other. For example, the management server 1 registers the device identification information and the wireless connection information included in the device information D3 in the device data table D11 in association with each other, and registers the device identification information included in the device information D3 and the meeting room identification information D2 in the device connection information table D15 in association with each other.

FIG. 12 is a sequence diagram illustrating a process executed when a communication terminal 5 activates a meeting application 502 installed in the communication terminal 5 in response to an operation by an operator in a meeting room where the operator enters. It is assumed that the projector as the meeting device 4 is turned on before the communication terminal 5 performs wireless connection with the projector as the meeting device 4, for example, after the operator is seated in the meeting room.

In step S11, the communication terminal 5 activates the meeting application 502 in response to the operation by the operator.

In step S12, the meeting application 502 installed in the communication terminal 5 transmits a request for acquiring a virtual office screen to the management server 1 on a selection screen.

In step S13, the management server 1 creates a virtual office screen (web page). In step S14, the management server 1 transmits the virtual office screen to the meeting application 502 installed in the communication terminal 5 that is the request source.

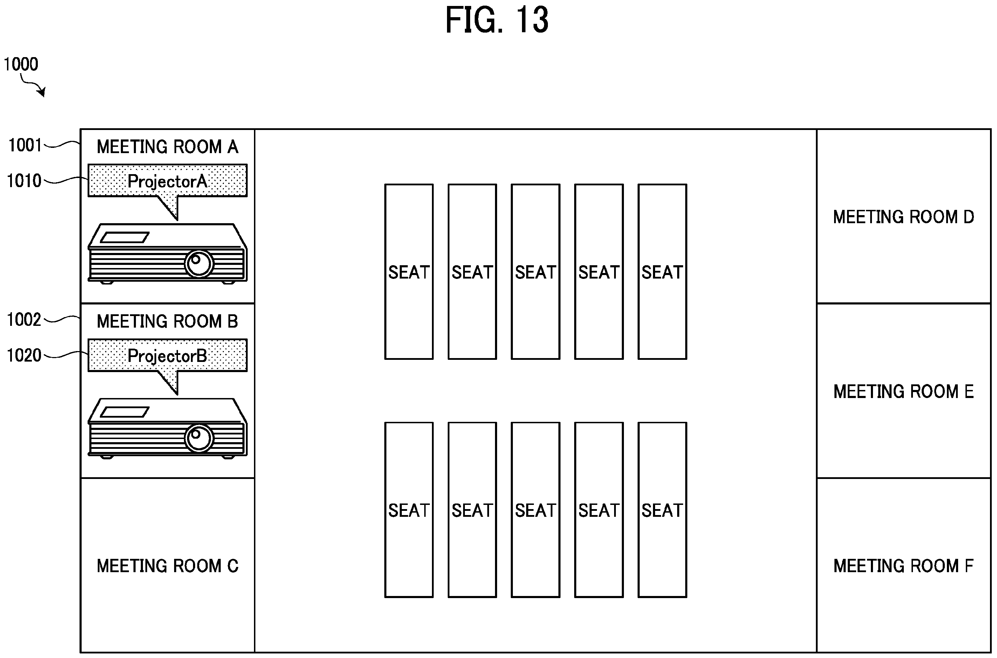

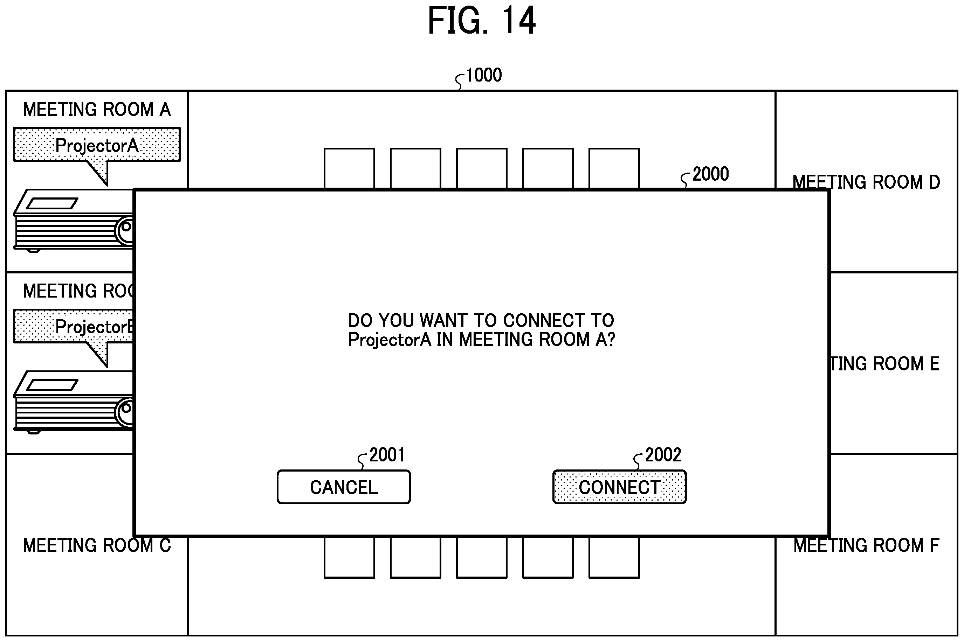

In step S15, the meeting application 502 installed in the communication terminal 5 displays the virtual office screen (see FIG. 13). In response to receiving a selection of a projector as the meeting device 4 by the operator on the virtual office screen, in step S16, the meeting application 502 installed in the communication terminal 5 transmits a request for acquiring wireless connection information of the projector as the meeting device 4 to the management server 1. For example, the meeting application 502 installed in the communication terminal 5 receives, from the operator who is in a meeting room A, a selection of a projector corresponding to the meeting room A, which is the meeting device 4 brought into the meeting room A by the operator. After that, the meeting application 502 installed in the communication terminal 5 may display a confirmation screen (see FIG. 14) used for confirming the selected content.

In response to the request for acquiring wireless connection information of the projector as the meeting device 4, in step S17, the management server 1 searches the device data table D11 for wireless connection information corresponding to the projector as the meeting device 4. In step S18, the management server 1 transmits the wireless connection information extracted from the device data table D11 to the meeting application 502 installed in the communication terminal 5 that is the request source.

When the meeting application 502 installed in the communication terminal 5 receives the wireless connection information from the management server 1, in step S19, the wireless communication unit 501 of the communication terminal 5 starts a wireless connection process with the projector as the meeting device 4 in the meeting room.

For example, a wireless connection process in the case where the wireless communication unit 501 of the communication terminal 5 uses an infrastructure mode of WI-FI Direct as a wireless LAN is described below. The wireless communication unit 501 of the communication terminal 5 starts a device discovery process and searches for a communication terminal having a one-to-one communication function such as a peer-to-peer (P2P) communication function in the vicinity. At this time, the wireless communication unit 501 of the communication terminal 5 periodically transmits a probe request frame in step S191, and checks whether a response to the probe request frame (a probe response frame) is received. In response to receiving the probe request frame, in step S192, the wireless communication unit 401 of the meeting device 4 returns a probe response frame.

In response to receiving the probe response frame, in step S193, the wireless communication unit 501 of the communication terminal 5 transmits a service discovery request frame. In response to receiving the service discovery request frame, in step S194, the wireless communication unit 401 of the meeting device 4 returns a service discovery response frame including the wireless connection information.

In step S195, the wireless communication unit 501 of the communication terminal 5 performs a wireless connection with the wireless communication unit 401 of the meeting device 4 using the wireless connection information acquired from the management server 1, and establishes a session of MIRACAST with the wireless communication unit 401 of the meeting device 4.

When the wireless connection is established with the projector as the meeting device 4 in step S195, the meeting application 502 installed in the communication terminal 5 notifies the management server 1 of the establishment of the wireless connection with the projector as the meeting device 4 in step S20.

In response to receiving the notification of the establishment of the wireless connection from the meeting application 502 installed in the communication terminal 5 that is the request source, in step S21, the management server 1 updates the display of the virtual office screen.

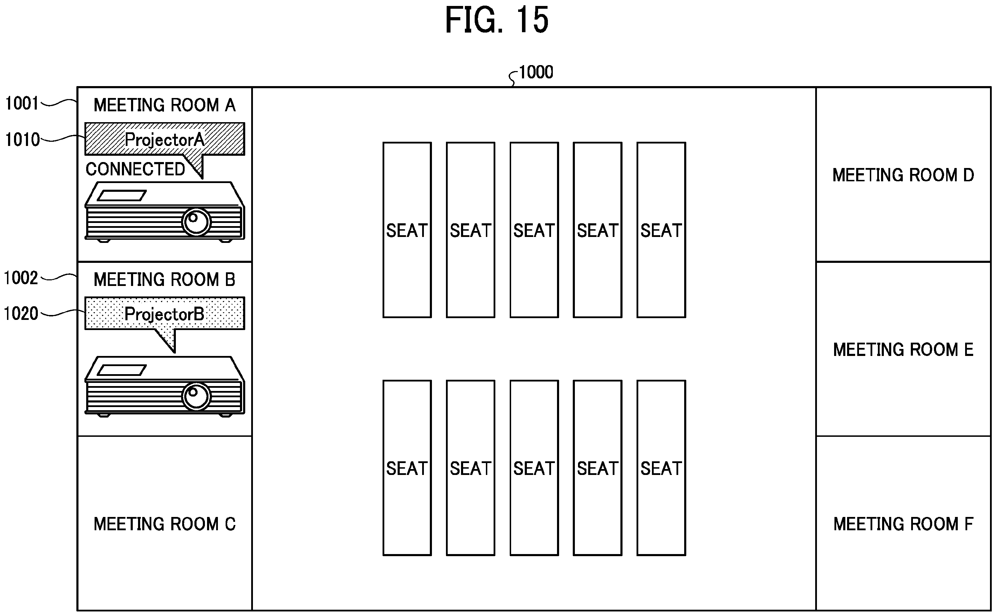

In step S22, the management server 1 transmits the updated virtual office screen (see FIG. 15) to each meeting application installed in a communication terminal, such as the meeting application 502 installed in the communication terminal 5 that is the request source, or each other meeting application installed in a communication terminal, such as the meeting application 502 installed in the communication terminal 5 requesting for acquiring the virtual office screen.

FIG. 13 is a diagram illustrating a configuration of a virtual office screen 1000 created by a display data creation unit 104. For example, the meeting room where the operator is going to hold the meeting is described as the meeting room A in the following description. It is assumed that the communication terminal 5 activates the meeting application 502 in the meeting room A in response to the operation by the operator. Since the operator has already entered the meeting room A, the device information of the meeting device 4 brought into by the operator at the time of entering the meeting room A is read from the RFID tag 3 by the RFID tag reader 2, and is transmitted to the management server 1 together with the meeting room identification information of the RFID tag reader 2. In other words, the management server 1 associates the device information of the meeting device 4 brought into the meeting room A with the meeting room identification information of the meeting room A.

The display data creation unit 104 acquires correspondence data in which the "meeting room identification information," the "meeting device (i.e., device identification information)," and the "connection state flag" are associated with one another according to the device connection information table D15 (see FIG. 9E), and creates a virtual office screen on which the display of the meeting device (i.e., device identification information) is mapped in the virtual office (see FIG. 10) created based on the data of the floor data table D13 (see FIG. 9C).

The virtual office screen 1000 illustrated in FIG. 13 is given by way of example as the display of the virtual office screen created based on the correspondence data set as an example in the device connection information table D15 (see FIG. 9E).

The device connection information table D15 (see FIG. 9E) presents, as an example, a state where correspondence data (first correspondence data) in which the meeting room A, device identification information X1, and "not connected" are associated with one another, and correspondence data (second correspondence data) in which a meeting room B, device identification information X2, and "not connected" are associated with one another are set.

The display data creation unit 104 associates an icon display 1010 of "ProjectorA" indicating the device identification information X1 with a position 1001 of the "meeting room A" based on the first correspondence data. The display data creation unit 104 also associates an icon display 1020 of "ProjectorB" indicating the device identification information X2 with a position 1002 of the "meeting room B" based on the second association data. The icon display 1010 of "ProjectorA" and the icon display 1020 of "ProjectorB" in FIG. 13 are both icons that indicate an unconnected state.

Since the virtual office screen 1000 is transmitted from the management server 1, the operator can confirm a display indicating that the "ProjectorA" is present in the meeting room A and the "ProjectorB" is present in the meeting room B using the meeting application 502. Since an icon is displayed at a position corresponding to the meeting room A where the operator is present and the device name of the icon is the device name "ProjectorA" of the projector being used by the operator, the operator in the meeting room A can select the icon display 1010 of "ProjectorA" corresponding to the projector brought into by the operator without erroneously selecting another device.

FIG. 14 is a diagram illustrating a confirmation screen. When the operator selects the icon display 1010 of "ProjectorA" on the virtual office screen 1000, a dialog box for confirmation is displayed.

In a dialog box 2000 illustrated in FIG. 14, which is given by way of example, the meeting room A and the device name (ProjectorA) are displayed in text. When the operator selects a cancel button 2001 in the dialog box 2000, the request for acquiring wireless connection information is cancelled. When the operator selects a connection button 2002 in the dialog box 2000, the request for acquiring wireless connection information for the device name (ProjectorA) is transmitted to the management server 1.

FIG. 15 is a diagram illustrating a screen updated after a wireless connection is established. In response to receiving the notification of the establishment of the wireless connection from the meeting application 502 that is the request source, the display data creation unit 104 updates the display of the virtual office screen 1000. In FIG. 15, as an example, a screen updated when the meeting application 502 notifies the establishment of the wireless connection with the device having the device name (ProjectorA) is illustrated.

When the management server 1 is notified of the establishment of the wireless connection with the device having the device name (ProjectorA) by the meeting application 502, the management server 1 updates the "connection state flag" of the first correspondence data in the device connection data table D15 (see FIG. 9E) from an unconnected state to a connected state.

The display data creation unit 104 updates the icon display 1010 of "ProjectorA" on the virtual office screen 1000 from the display of the unconnected state to the display of the connected state based on the updated data of the device connection information table D15 (see FIG. 9E).

As illustrated in FIG. 15, when the icon display 1010 of "ProjectorA" on the virtual office screen 1000 is changed from the display of the unconnected state to the display of the connected state, the updated data of the virtual office screen 1000 is transmitted from the management server 1, and the operator can confirm the display of the wireless connection with the device whose device name is "ProjectorA" in the meeting room A using the meeting application 502.

As described above, by providing the meeting application 502 with the virtual office screen 1000, the operator can connect the communication terminal 5 of own to the meeting device 4 (projector) brought into the meeting room A without making a mistake. In addition, the operator can confirm that the communication terminal 5 of own is wirelessly connected to the meeting device 4 (projector) brought into the meeting room A using the meeting application 502.

### First Modification

In a first modification, in order to further reduce the possibility of erroneously connecting to a projector in another meeting room, a case is described below, in which the name of the meeting to be held is registered in advance in the management server 1, and the name of the meeting is displayed when an icon on the virtual office screen 1000 is selected.

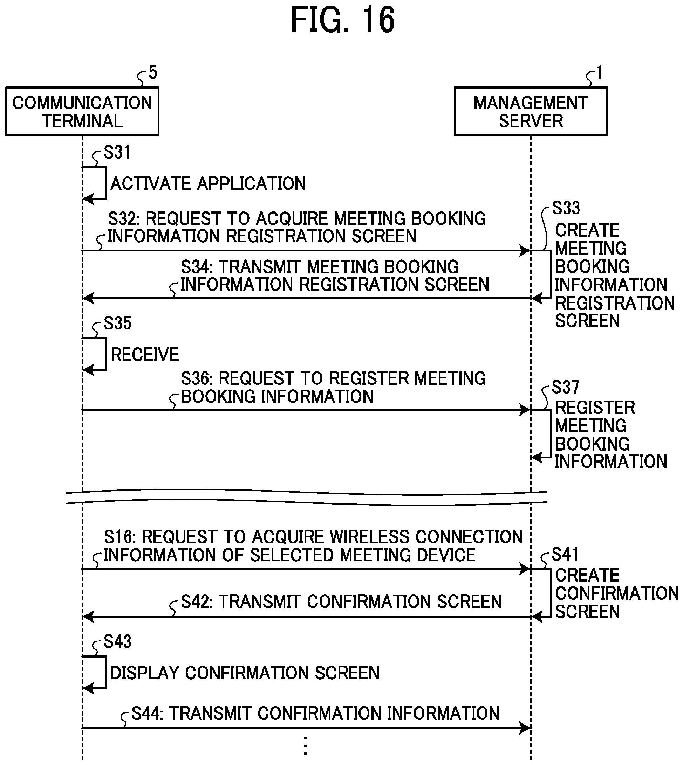

FIG. 16 is a sequence diagram illustrating a process to register and display the name of a meeting according to the first modification. Before the meeting is held, the communication terminal 5, in response to the operation by the operator, activates the meeting application 502, and registers, for example, booking information for the meeting to be held. The booking information is described below.

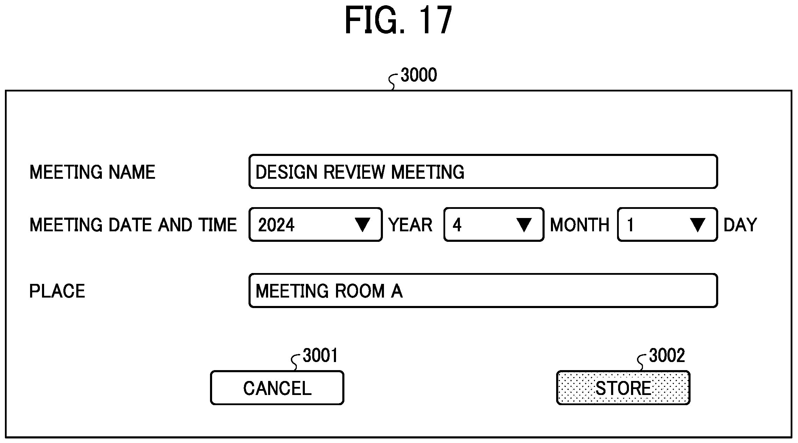

In step S31, the communication terminal 5 activates the meeting application 502. When the operator presses a meeting booking information registration button, for example, on a displayed selection screen, in step S32, the meeting application 502 installed in the communication terminal 5 requests the management server 1 to acquire a meeting booking information registration screen (see FIG. 17).

In step S33, the management server 1 creates a meeting booking information registration screen (web page). In step S34, the management server 1 transmits the meeting booking information registration screen to the meeting application 502 installed in the communication terminal 5 that is the request source.

The operator inputs information in input fields such as the input fields of a meeting name, a date and time, and a place of the meeting on the meeting booking information registration screen (see FIG. 17), and presses a store button.

In step S35, the information input in the input fields is received by the meeting application 502 installed in the communication terminal 5 and the store button is pressed. In step S36, the meeting application 502 installed in the communication terminal 5 requests the management server 1 to register the input information (meeting booking information).

In step S37, the management server 1 stores the meeting booking information transmitted from the meeting application 502 installed in the communication terminal 5 in association with a meeting ID in the meeting booking data table D14 (see FIG. 9D). It is assumed that the meeting name is associated with the meeting ID in the meeting booking data table D14.

In the case of the information input in FIG. 17, in the meeting booking data table D14, a "meeting 1" is set for the meeting ID, "April 1st 13:00 to 14:00" is set for the date and time, the "meeting room A" is set for the place, and so on. In the meeting booking data table D14, a meeting name (e.g., a design review meeting) is set in association with the meeting 1.

When the time for starting the meeting registered in advance approaches, the operator enters the meeting room A that is registered in advance, with the communication terminal 5 in which the meeting application 502 is installed and the projector as the meeting device 4. The processes from step S1 when the operator enters the room up to step S16 after the operator enters the room are similar to those illustrated in FIGS. 11 and 12. In other words, substantially the same processes are performed until the meeting application 502 installed in the communication terminal 5 receives the selection of the projector as the meeting device 4 in the meeting room A from the operator on the virtual office screen (see FIG. 13) and requests the management server 1 to acquire the wireless connection information of the projector as the meeting device 4 in the meeting room A in step S16.

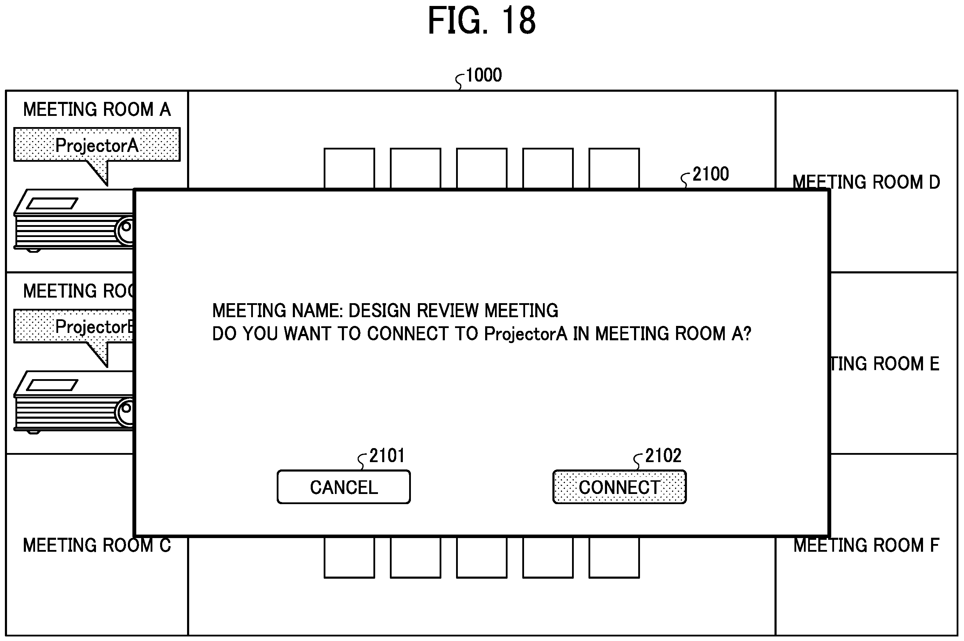

In response to receiving the request for acquiring wireless connection information of the projector as the meeting device 4 in the meeting room A, in step S41, the management server 1 creates a confirmation screen. At this time, the management server 1 searches the meeting booking data table D14 (see FIG. 9D), and acquires the meeting ID (meeting name) of the data in which the booked "date and time" corresponds to the current date and time and the "place" corresponds to the meeting room A. Since the operator has already booked the meeting, the data of the "meeting 1" is found in the meeting booking data table D14, and the "design review meeting" corresponding to the "meeting 1" is acquired as the meeting name. The display data creation unit 104 of the management server 1 creates a confirmation screen including not only the "meeting room A" for the meeting room name and the device name "ProjectorA" for the device name of the selected projector as the meeting device 4 but also the "design review meeting" for the meeting name. A screen including a dialog box in FIG. 18 is given by way of example as the confirmation screen.

In step S42, the display data creation unit 104 of the management server 1 transmits the confirmation screen to the meeting application 502 installed in the communication terminal 5 that is the request source. In step S43, the meeting application 502 installed in the communication terminal 5 that is the request source displays the confirmation screen.

By displaying the confirmation screen, the operator can see whether not only the meeting room name and device name but also the meeting name match. Thus, the operator can comprehensively determine whether the selected device is the target device to be connected without making a mistake. In step S44, the meeting application 502 installed in the communication terminal 5 transmits, to the management server 1, confirmation information (selection of connection or cancellation) received from the operator on the confirmation screen.

In the case where the management server 1 receives a selection of connection from the meeting application 502 installed in the communication terminal 5, the management server 1 executes the process according to the request for acquiring wireless connection information described in the embodiment. In the case where the management server 1 receives a selection of cancellation from the meeting application 502 installed in the communication terminal 5, the management server 1 cancels the request for acquiring wireless connection information.

The processes for executing the process according to the request for acquiring wireless connection information correspond to the processes from step S17, and the description thereof is omitted.

FIG. 17 is a diagram illustrating a meeting booking information registration screen 3000. The meeting booking information registration screen 3000 illustrated in FIG. 17 includes input fields of a meeting name, a meeting date and time, and a place (a meeting place). For example, the "design review meeting" is set for the meeting name and "April 1, 2024" is set for the meeting date and time. In detail, the time may be set. For example, a time period such as "13:00" to "14:00" may be set for the meeting date and time. For the place, for example, the "meeting room A" is set. By pressing a cancel button 3001 on the meeting booking information registration screen 3000, the input contents are cancelled. By pressing a store button 3002 on the meeting booking information registration screen 3000, the input contents are transmitted to the management server 1.

FIG. 18 is a diagram illustrating a dialog box 2100 for confirmation. In the dialog box 2100 illustrated in FIG. 18, the meeting room A, the device name (ProjectorA), and the meeting name are displayed in text. The "design review meeting" set for the meeting name is a specific name of an example of the "meeting 1." The dialog box 2100 is transmitted to the meeting application 502 installed in the communication terminal 5 and displayed.

When the operator selects a cancel button 2101 in the dialog box 2100 on the communication terminal 5, the request for acquiring wireless connection information is cancelled in the management server 1. When the operator selects a connection button 2102 in the dialog box 2100 on the communication terminal 5, the wireless connection information of the device whose device name (ProjectorA) is searched for in the management server 1 is transmitted to the communication terminal 5.

As described above, in the first modification, the meeting name is displayed on the confirmation screen before the connection is made. Accordingly, the operator can more reliably perform an operation for connecting to the projector desired to be connected.

### Second Modification

In a second modification, a description is given of the present disclosure applied to a case in which a place does not have a clear name unlike a meeting room, or a case in which the meeting place is not determined until a meeting actually starts because it is not known whether the desired meeting place is available. A case is described below, in which a meeting is held in an open space, which is an example of a place not having a clear name.

In the case of the open space, similar to the case of the meeting room, the setting of the open space is stored in the floor data storage unit 114 of the management server 1 in advance and the display data creation unit 104 creates a virtual open space obtained by simulating an actual open space. The RFID tag reader 2 is attached to the back side of each table in the actual open space.

In the storage unit 202 of the RFID tag reader 2, a table number issued by the management server 1 is stored, instead of the meeting room identification information. The table number is managed by the management server 1 as well as the RFID tag reader 2.

In the second modification, the meeting application 502 installed in the communication terminal 5 used by the operator is logged in with the same user account both when the meeting is booked and when the device is connected. In order to use the meeting application 502, an account is issued to the employees individually. The user information of each employee is stored in the user data storage unit 111 in association with each employee.

When the communication terminal 5 activates the meeting application 502 in response to the operation by the operator and the meeting application 502 is not yet logged in by the operator, the operator inputs a user name (e.g., an e-mail address) and a password, and presses a login button. When the operator presses the login button, a login request is transmitted to the management server 1. When the management server 1 receives the login request, the user authentication unit 101 of the management server 1 executes an authentication process for the login user, and acquires the user information stored in the user data storage unit 111. When the authentication process for the login user and the acquisition of the user information are successful, a notification of the success of the login is transmitted to the meeting application 502.

The operator registers the meeting booking information in advance before the meeting starts. The processes of registering the meeting booking information are the same as those of the first modification. However, for the meeting place, the information on the meeting organizer is registered. Since the meeting application 502 is already logged in with the account of the operator, the user information of the operator who has already logged in is registered as the information on the meeting organizer at the time of receiving the request for registering the meeting booking information.

When the time for starting the meeting registered in advance approaches, the operator moves to the place where the meeting is to be held, with the communication terminal 5 in which the meeting application 502 is installed and the projector as the meeting device 4. The operator walks to a table not in use in the open space and places the projector as the meeting device 4 on the table. Then, the RFID tag reader 2 on the back side of the table reads the device information of the projector as the meeting device 4 from the RFID tag 3. The processes from this point to the registration of the information of the projector as the meeting device 4 and the table number in the management server 1 are substantially the same as those in the embodiment.

After the information of the projector as the meeting device 4 is registered in the management server 1, the communication terminal 5 activates the meeting application 502 in response to the operation by the operator. When the meeting application 502 is activated in response to the operation by the operator, the meeting application 502 displays a button for displaying a "virtual open space." When the operator presses the button for displaying the "virtual open space," the meeting application 502 opens the page of the open space. The meeting application 502 arranges and displays, at a position of the corresponding table in the layout of the open space in the office (virtual open space) registered in advance, the icon of the projector as the meeting device 4 whose device information is read by the RFID tag reader 2 on the back side of the table.

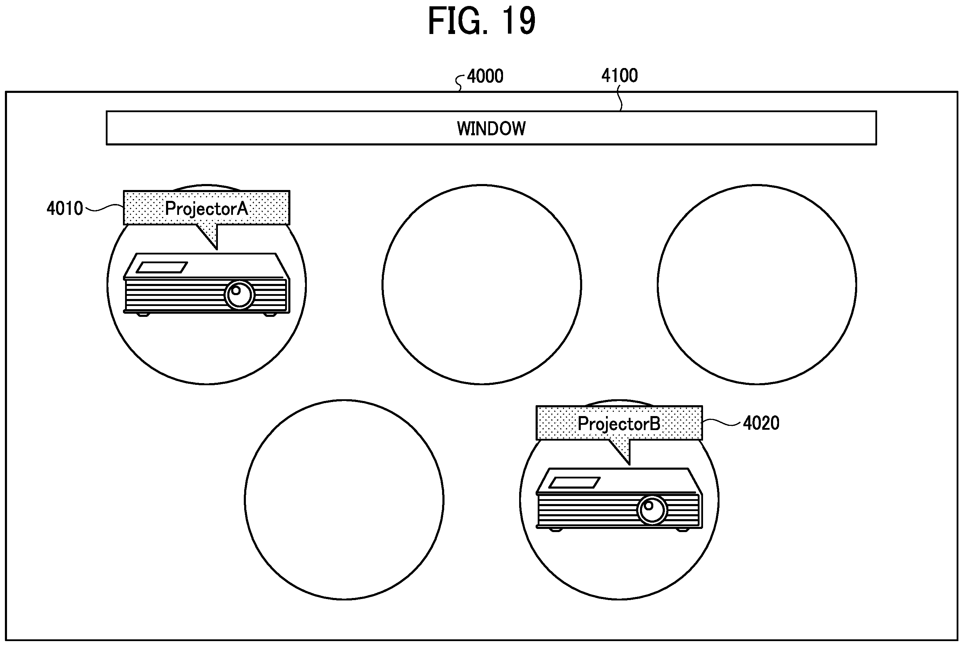

FIG. 19 is a diagram illustrating a configuration of a virtual open space screen 4000 created by a display data creation unit 104. The display data creation unit 104 creates a virtual open space screen by adding the display of the projector as the meeting device 4 whose device information is read by the RFID tag reader 2 to the position of the table having the corresponding table number in the layout of the open space (a window 4100 and tables at five positions) created based on the data in the floor data storage unit 114 (see FIG. 8).

The virtual open space screen 4000 illustrated in FIG. 19 is a display example of the virtual open space screen when the device information of projectors as meeting devices 4 used on the tables at two positions are read.

In the tables at the two positions, the icons of the projectors as the meeting devices 4 used on the tables are displayed. In a table at one position, an icon display 4010 indicating "ProjectorA" is displayed. In the table at the other position, an icon display 4020 indicating "ProjectorB" is displayed. In FIG. 19, the connection states of both icon displays indicate an unconnected state. However, once the wireless connections are established, the connection states are updated to a connected state.

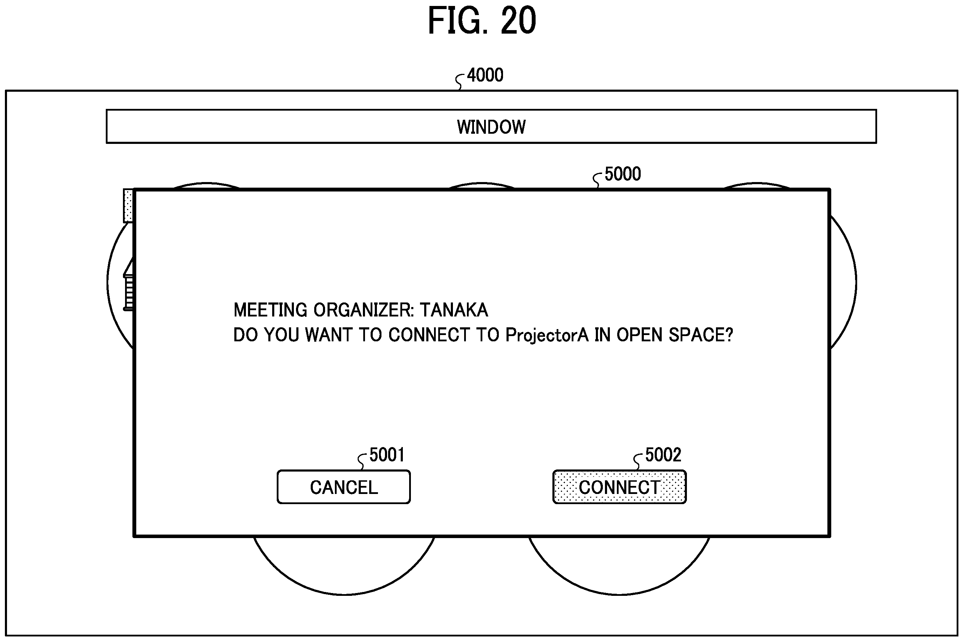

Specifically, it is assumed that the communication terminal 5 placed on the table, in response to the operation by the operator, tries to wirelessly connect to the projector as the meeting device 4. In this state, the operator presses, on the virtual open space screen 4000 displayed by the meeting application 502, the display of the device name of the device located at the table which the operator uses. Then, the management server 1 acquires the meeting name from the meeting booking information of the meeting starting at the current time, which is registered already in the meeting data storage unit 112 by the meeting application 502 installed in the communication terminal 5 as the request source used by the operator. When the meeting name is acquired, the display data creation unit 104 creates a confirmation screen (see FIG. 20) and transmits the confirmation screen to the meeting application 502 that is the request source. The confirmation screen may include the device name of the projector and the meeting name registered in advance or the name of the operator that is the name of the meeting organizer. The subsequent processes are substantially the same as those of the first modification.

FIG. 20 is a diagram illustrating a dialog box 5000 for confirmation. In the dialog box 5000 illustrated in FIG. 20, the name of the meeting organizer is displayed in text. When the operator selects a cancel button 5001 in the dialog box 5000 on the communication terminal 5, the request for acquiring wireless connection information is cancelled in the management server 1. When the operator selects a connection button 5002 in the dialog box 5000 on the communication terminal 5, the wireless connection information of the device whose device name (ProjectorA) is searched for in the management server 1 is transmitted to the communication terminal 5.

After the wireless connection is established, the connection state of the icon display 4010 indicating "ProjectorA" is updated from the display of the unconnected state to the display of the connected state.

As described above, in the second modification, even in a case in which a place does not have a clear name unlike a meeting room, or a case in which the meeting place is not determined until a meeting actually starts because it is not known whether the desired meeting place is available, the connection to the projector desired to be connected can be performed. Since the name of the meeting organizer is displayed on the confirmation screen, the operator can more reliably perform the operation for connecting to the projector desired to be connected.

The program executed by the management server 1 or the communication terminal 5 according to the embodiments and modifications described above is stored in advance in, for example, a ROM and provided.

The program executed by the management server 1 or the communication terminal 5 according to the embodiments and modifications described above may be configured to be recorded in any computer-readable recording medium, such as a compact disc read-only memory (CD-ROM), a flexible disk (FD), a compact disc-recordable (CD-R), or a digital versatile disc (DVD), in an installable or executable file format and provided as a computer program product.

Alternatively, the program executed by the management server 1 or the communication terminal 5 according to the embodiments and modifications described above may be stored in a computer connected to a network such as the Internet so that the program can be downloaded through the network and provided. Still alternatively, the program executed by the management server 1 or the communication terminal 5 according to the embodiments and modifications described above may be configured to be provided or distributed via a network such as the Internet.

The program executed by the management server 1 or the communication terminal 5 according to the embodiments and modifications described above has a module structure including the above-described functional units. As actual hardware, a processor such as the CPU reads the program from the above-described recording medium and executes the program to load the above-described functional units onto a main storage device and implements the above-described functional units.

Although the embodiments and modifications of the present disclosure have been described above, the above-described embodiments and modifications are presented as examples and are not intended to limit the scope of the present disclosure. Such novel embodiments and modifications may be carried out in various other modified forms. Various omissions, substitutions, and changes may be made without departing from the gist of the present disclosure. Such novel embodiments and modifications thereof are within the scope and gist of the present disclosure and are also within the scope of the claims and the equivalent thereof.

Aspects of the present disclosure are, for example, as follows.

According to Aspect 1, a system includes one or more devices, one or more reading devices each of which reads device information of the one or more devices, a server apparatus that receives, from each one of the one or more reading devices, correspondence data associating the device information read by the reading device and location information indicating a location of the reading device, and stores the correspondence data associating the device information and the location information, and an information terminal. The server apparatus transmits, to the information terminal, display information including identification information of the one or more devices each in correspondence with the location indicated by the location information read by the reading device that has read the device information of the one or more devices, and transmits, to the information terminal, wireless connection information of a particular device selected by the information terminal from the one or more devices based on the display information. The information terminal establishes wireless communication with the particular device using the wireless connection information transmitted from the server apparatus.

According to Aspect 2, in the system of Aspect 1, the device information read by the reading device includes the wireless connection information of the particular device.

According to Aspect 3, in the system of Aspect 1 or 2, each reading device reads the device information of the device in a reading range in a non-contact manner.

According to Aspect 4, in the system of any one of Aspects 1 to 3, the identification information of the particular device displayed includes a device name of the particular device.

According to Aspect 5, in the system of any one of Aspects 1 to 4, the information terminal further displays booking information of the location booked in advance in association with the identification information of the one or more devices to be selected.

According to Aspect 6, in the system of Aspect 5, the information terminal displays the booking information based on the date and time booked for the use of the location.

According to Aspect 7, in the system of any one of Aspects 1 to 6, the server apparatus updates the connection state of the particular device being displayed to indicate the connected state when the wireless communication between the particular device and the information terminal is established.

According to Aspect 8, in the system of any one of Aspects 1 to 7, the display information is for displaying the identification information of the particular device arranged on information representing an actual layout indicating respective locations of the one or more reading devices.

According to Aspect 9, a method performed by a system including a plurality of devices, a plurality of reading devices, a server apparatus, and an information terminal includes reading, with one or more reading devices, device information of the one or more devices, transmitting, from each one of the one or more reading devices to the server apparatus, correspondence data associating location information indicating a location of the reading device and the device information read by the reading device, transmitting, from the server apparatus to the information terminal, display information including identification information of one or more devices each in correspondence with the location indicated by the location information read by the reading device that has read the device information of a particular device, transmitting, from the server apparatus to the information terminal, wireless connection information of the particular device selected by the information terminal from the one or more devices based on the display information, and establishing, with the information terminal, wireless communication with the particular device using the wireless connection information transmitted from the server apparatus.

According to Aspect 10, a carrier medium carries computer readable code for controlling a server apparatus to carry out a method including receiving, from one or more reading devices, correspondence data associating location information indicating a location of each one of the one or more reading devices and device information read by the reading device, transmitting, to an information terminal, display information including identification information of one or more devices each in correspondence with the location indicated by the location information read by the reading device that has read the device information of a particular device, and transmitting, to the information terminal, wireless connection information of the particular device selected by the information terminal from the one or more devices based on the display information.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A system comprising:
one or more devices (4);
one or more reading devices (2) each being configured to read device information of the one or more devices (4);
a server apparatus (1) to receive, from each one of the one or more reading devices (2), correspondence data associating the device information read by the reading device (2) and location information indicating a location of the reading device (2), and store the correspondence data associating the device information and the location information; and
an information terminal (5), wherein
the server apparatus (1) transmits, to the information terminal (5), display information including identification information of the one or more devices (4) each in correspondence with the location indicated by the location information read by the reading device (2) that has read the device information of the one or more devices (4), and
transmits, to the information terminal (5), wireless connection information of a particular device (4) selected by the information terminal (5) from the one or more devices based on the display information, and
the information terminal (5) establishes wireless communication with the particular device (4) using the wireless connection information transmitted from the server apparatus (1).

2. The system according to claim 1, wherein the device information read by the reading device (2) includes the wireless connection information of the particular device (4).

3. The system according to claim 1 or 2, wherein each reading device (2) reads the device information of the device (4) in a reading range in a non-contact manner.

4. The system according to any one of claims 1 to 3, wherein the identification information of the particular device (4) displayed includes a device name of the particular device (4).

5. The system according to any one of claims 1 to 4, wherein the information terminal (5) further displays booking information of the location booked in advance in association with the identification information of the one or more devices to be selected.

6. The system according to claim 5, wherein the information terminal (5) displays the booking information based on a date and time booked for use of the location.

7. The system according to any one of claims 1 to 6, wherein the server apparatus (1) updates a connection state of the particular device (4) being displayed to indicate a connected state when the wireless communication between the particular device (4) and the information terminal (5) is established.

8. The system according to any one of claims 1 to 7, wherein the display information is for displaying the identification information of the particular device (4) arranged on information representing an actual layout indicating respective locations of the one or more reading devices (2).

9. A method performed by a system including a plurality of devices (4), a plurality of reading devices (2), a server apparatus (1), and an information terminal (5), the method comprising:
reading (S1), with one or more reading devices (2), device information of the one or more devices (4);
transmitting (S4), from each one of the one or more reading devices to the server apparatus (1), correspondence data associating location information indicating a location of the reading device (2) and the device information read by the reading device (2);
transmitting (S14), from the server apparatus (1) to the information terminal (5), display information including identification information of one or more devices (4) each in correspondence with the location indicated by the location information read by the reading device (2) that has read the device information of a particular device (4);
transmitting (S18), from the server apparatus (1) to the information terminal (5), wireless connection information of the particular device (4) selected by the information terminal (5) from the one or more devices based on the display information; and
establishing (S195), with the information terminal (5), wireless communication with the particular device (4) using the wireless connection information transmitted from the server apparatus (1).

10. A carrier medium carrying computer readable code for controlling a server apparatus (1) to carry out a method, the method comprising:
receiving (S4), from one or more reading devices, correspondence data associating location information indicating a location of each one of the one or more reading devices (2) and device information read by the reading device (2);
transmitting (S14), to an information terminal (5), display information including identification information of one or more devices (4) each in correspondence with the location indicated by the location information read by the reading device (2) that has read the device information of a particular device (4); and
transmitting (S18), to the information terminal (5), wireless connection information of the particular device (4) selected by the information terminal (5) from the one or more devices based on the display information.
